# EUROPÄISCHE PATENTSCHRIFT

(11) **EP 2 017 636 B1**
(45) Veröffentlichungstag und Bekanntmachung des Hinweises auf die Patenterteilung: **19.06.2013**
(21) Anmeldenummer: 08012919.0
(22) Anmeldetag: 17.07.2008
(51) Int. Cl.: G01S 19/20

(54) **Verfahren und Vorrichtung zur Bestimmung eines Integritätsrisikos bei einem Satelliten-Referenziersystems**
Method and device for calculating an integrity risk in a satellite referencing system
Procédé et dispositif de détermination du risque pour l'intégrité pour un système de référencement par satellite

(30) Priorität: 20.07.2007 DE 102007034468
(43) Veröffentlichungstag der Anmeldung: 21.01.2009
(73) Patentinhaber: Astrium GmbH, 81663 München (DE)
(72) Erfinder: Trautenberg, Hans L., Dr., D-50823 Köln (DE)
(74) Vertreter: Hummel, Adam

(56) Entgegenhaltungen:
- C. PECCHIONI ET AL: "Combined GALILEO and EGNOS Integrity Signal: a multisystem integrity algorithm" PROCEEDINGS OF THE ESA WORKSHOP GNSS SIGNAL 2007, 24. April 2007 (2007-04-24), XP002505280 Noordwijk, The Nederlands
- PAOLO D'ANGELO AND ANTONIO FERNANDEZ: "GNSS Multi-System Integrity Algorithm Definition and Evaluation" PROCEEDINGS OF ION GNSS 2007, 25. September 2007 (2007-09-25), Seiten 3057-3063, XP002505281 Fort Worth, Texas , USA
- V. OEHLER ET AL: "Galileo System Design & Performance" PROCEEDINGS OF ION GNSS 2006, 26. September 2006 (2006-09-26), Seiten 492-503, XP002505282 Fort Worth, Texas, USA
- T. WU AND STEPHEN PECK: "An Analysis of Satellite Integrity Monitoring Improvement for WAAS" PROCEEDINGS OF ION GPS 2002, 24. September 2002 (2002-09-24), Seiten 756-765, XP002505283 Portland, Oregon, USA

## Beschreibung

Die Erfindung betrifft ein Verfahren zur Bestimmung eines Integritätsrisikos gemäß Anspruch 1 und eine entsprechende Vorrichtung gemäß Anspruch 7, die zum Einsatz bei einem Satelliten-Referenziersystem geeignet und vorgesehen sind.

Satelliten-Referenziersysteme, wie beispielsweise das im Aufbau befindliche europäische Satellitennavigationssystem Galileo (im Folgenden als Galileo-System oder kurz als Galileo bezeichnet) weisen ein, eine Mehrzahl von Satelliten umfassendes Satelliten-System, ein mit einer zentralen Berechnungsstation verbundenes erdfestes Empfangseinrichtungs-System sowie Nutzungssysteme auf, welche die von den Satelliten übermittelten Satellitensignale auswerten und nutzen. Die Satellitensignale können zur Positionsbestimmung oder Navigation verwendet werden.

Insbesondere die Luftfahrt ist an einem geeigneten Integritätskonzept für Satelliten-Referenziersysteme interessiert. Das gegenwärtige Integritätskonzept für Galileo sieht vor, ein Integritätsrisiko an einem Alarmschwellwert für vier unterschiedliche Zustände zu berechnen und den gewichteten Beitrag zu dem gesamten Integritätsrisiko hinzuzufügen. Wenn dieses Risiko über einem erlaubten Integritätsrisiko liegt, wird ein Benutzer über einen Alarm informiert. Dieses Konzept bietet die am wenigste konservative Abschätzung des Integritätsrisikos bei der höchsten Kontinuität und Verfügbarkeit. Es wird jedoch durch eine nicht standardisierte Prozedur berechnet. Das Integritätskonzept von Galileo ist ausführlich in der WO 2005/088332 A2 beschrieben.

Aus der Veröffentlichung "Combined GALILEO and EGNOS Integrity Signal: a multisystem integrity algorithm", C. PECCHIONI ET AL, PROCEEDINGS OF THE ESA WORKSHOP GNSS SIGNAL 2007, 24. April 2007 (2007-04-24), Noordwijk, The Nederlands, ist ein Multisystem-Algorithmus bekannt, der Integritätsinformation von Galileo und dem SBAS (Satellite Based Augmentation System) EGNOS zusammenführt und eine RAIM (Receiver Autonomous Integrity Monitoring)-Technik ausnutzt, um Fehler zu erkennen, die nicht durch einen Integritätsalgorithmus detektiert werden können. Bei diesem Multisystem-Algorithmus wird das Schutzpegelkonzept von EGNOS in das Integritätsrisikokonzept von Galileo übergeführt, da beim Integritätsrisikokonzept von Galileo keine Unterscheidung zwischen vertikalen und horizontalen Anwendungsfällen wie bei EGNOS erforderlich ist, sondern direkt mit einem globalen Integritätsrisiko gearbeitet wird, ohne dass strenge Zuweisungen von horizontalen und vertikalen Alarmschranken und Schutzpegeln vorgenommen werden müssen.

Aufgabe der vorliegenden Erfindung ist es nun, ein Verfahren und eine Vorrichtung zur Bestimmung eines Integritätsrisikos bei einem Satelliten-Referenziersystem zu schaffen, die vor allem für den Einsatz in der Luftfahrt geeignet sind.

Diese Aufgabe wird durch ein Verfahren zur Bestimmung eines Integritätsrisikos mit den Merkmalen nach Anspruch 1 und eine entsprechende Vorrichtung mit den Merkmalen nach Anspruch 7 gelöst. Weitere Ausgestaltungen der Erfindung ergeben sich aus den abhängigen Ansprüchen.

Ein wesentlicher Gedanke der Erfindung besteht nun darin, eine Abbildung der in dem Galileo Integritätskonzept verwendeten Parameter auf die in SBAS (Satellite Based Augmentation System) verwendeten Parameter zu ermöglichen. Ein solches Vorgehen kommt der Luftfahrtgemeinschaft (aviation community) entgegen, die auch für das Galileo-System nach einem Integritätskonzept fragt, das identisch zu dem für SBAS verwendeten Konzept ist.

Ein Beispiel für ein SBAS System ist das WAAS (Wide Area Augmentation System). Über das WAAS können Korrektursignale übertragen werden, die eine genauere Positionsbestimmung ermöglichen. Auf die SBAS und WAAS Konzepte und Gleichungen wird in der vorliegenden Erfindung Bezug genommen.

Unter einem Integritätsrisiko wird die Wahrscheinlichkeit verstanden, dass ein berechneter Positionsfehler während einer beliebigen, durchgehenden Periode einen bestimmten Schwellenwert, das so genannte Alert Limit, übersteigt und der Nutzer nicht innerhalb einer bestimmten Zeitspanne informiert wird.

Ein so genannter False Alarm, also ein fälschlicherweise ausgelöster Alarm, tritt immer dann auf, wenn der geschätzte SISE (Signal in Space Error) größer ist als ein festgelegter Schwellwert und der tatsächliche SISE kleiner ist als der festgelegte Schwellwert.

Die Bezeichnung Signal in Space entstammt der Aufgabe eines Satellitennavigationssystems Informationen via Signale im Raum zu verteilen, um eine Positionsbestimmung zu ermöglichen. Im Galileo-System strahlt jeder Satellit vier Ranging Signale ab, die abhängig vom jeweiligen Signal und Dienst E-phemeriden, Uhrenparameter, Integritätsinformationen und andere Daten enthalten.

SISE (Signal in Space Error) ist die maximale Auswirkung auf die Entfernung zwischen Satellit und Nutzer, den der Fehler verursacht, den das Signal beim Verlassen des Phasenzentrums der Satellitenantenne besitzt.

Eine Vorhersage der Genauigkeit der Navigationssignale wird als "Signal in Space Accuracy" (SISA) bezeichnet. SISA bezeichnet eine Vorhersage der minimalen Standardabweichung einer Gaußverteilung, welche die Verteilungen des SISE aller möglichen Nutzerpositionen im Sichtbarkeitsbereich des Satelliten für den Fall, dass keine systematischen Fehler auftreten, einschließt ("bounded").

"Bounden" wird in diesem Fall folgendemaßen definiert: eine Verteilung einer Zufallsvariablen A wird von einer Verteilung einer Zufallsvariablen B ge-"bounded", wenn diese mit der Wahrscheinlichkeiten A<-L und für A>+L kleiner ist als die Summe der Wahrscheinlichkeiten für B<-L und für B>+L, für alle L/=0.

Die vorliegende Erfindung betrifft nun gemäß einer Ausführungsform ein Verfahren zur Bestimmung eines Integritätsrisikos bei einem Satelliten-Referenziersystem, das folgende Schritte umfasst:
- Ermitteln von Galileo-Parametern nach dem Galileo Integritätskonzept;
- Abbilden der Galileo-Parameter auf SBAS-Parameter; und
- Bestimmen des Integritätsrisikos für das Satelliten-Referenziersystem nach dem SABS Integritätskonzept unter Verwendung der SBAS-Parameter.

Dieser Ansatz hat den Vorteil dass der standardisierte WAAS Schutzpegel (protection level) verwendet werden kann. Es wird somit beispielsweise für das Galileo System ein Integritätskonzept ermöglicht, welches auf dem für SBAS definierten standardisierten Schutzpegel basiert.

Gemäß einer Ausführungsform kann der Schritt des Ermittelns ein Ermitteln der Galileo-Parameter "Signal in Space Accuracy" (SISA), "Signal in Space Monitoring Accuracy" (SISMA) und der Wahrscheinlichkeit eines "Ranging Signal Failures" beinhalten. Der Schritt des Abbildens kann ein Berechnen eines neuen Parameters "Signal in Space Monitored Accuracy" (SISMdA) umfassen und der Schritt des Bestimmen kann ein Verwenden des neuen Parameters SISMdA als Takt- und Orbitanteil der UDRE in den für SBSA standardisierten Schutzpegel-Gleichungen (protection level equations) umfassen.

Ferner kann für das Galileo Integritätskonzept eine "Range Error" Verteilung von fehlerfreien Satelliten durch eine Gaußverteilung mit "Null" Mittelwert und "Signal in Space Accuracy" (SISA) Standardabweichung eingeschlossen werden und eine Verteilung der Differenz zwischen dem geschätzten "Signal in Space Error" und dem wahren Signal in Space Error" durch eine Gaußverteilung mit "Null" Mittelwert und "Signal in Space Monitoring Accuracy" (SISMA) Standardabweichung eingeschlossen werden.

Eine Gaußfunktion mit Standardabweichung SISMdA und "Null" Mittelwert kann eine gewichtete Summe der fehlerfreien und der fehlerhaften Verteilung eines Satelliten einschließen.

Eine "Range Error" Verteilung eines fehlerhaften Satelliten kann eine Gaußverteilung mit Standardabweichung SISMA und einem Mittelwert sein, der ein Vorfaktor ist, der eine erlaubte Fehleralarmrate multipliziert mit der Quadratwurzel der Summe des Quadrats von SISMA und dem Quadrat von SISA widerspiegelt.

Gemäß einer weiteren Ausführungsform können Zweifrequenz "ranging signals" verwendet werden und ein ionosphärische Beitrag der WAAS Gleichungen kann entsprechend den Galileo Gleichungen angepasst werden.

Die vorliegende Erfindung betrifft gemäß einer weiteren Ausführungsform ein Computer Programm zur Durchführung eines Verfahrens gemäß einer Ausführungsform der vorliegenden Erfindung und ein Computer-Programm-Produkt beinhaltend einen maschinenlesbaren Programmträger, auf dem das Computer-Programm in der Form von elektronisch und/oder optischen lesbaren Steuersignalen gespeichert sein kann.

Die vorliegende Erfindung betrifft gemäß einer weiteren Ausführungsform eine Vorrichtung zur Bestimmung eines integritätsrisikos bei einem Satelliten-Referenziersystem, mit folgenden Merkmalen:
- einer Einrichtung zum Ermitteln von Galileo-Parametern nach dem Galileo Integriätskonzept;
- einer Einrichtung zum Abbilden der Galileo-Parameter auf SBAS-Parameter; und
- einer Einrichtung zum Bestimmen des Integritätsrisikos für das Satelliten-Referenziersystem nach dem SABS Integritätskonzept unter Verwendung der SBAS-Parameter.

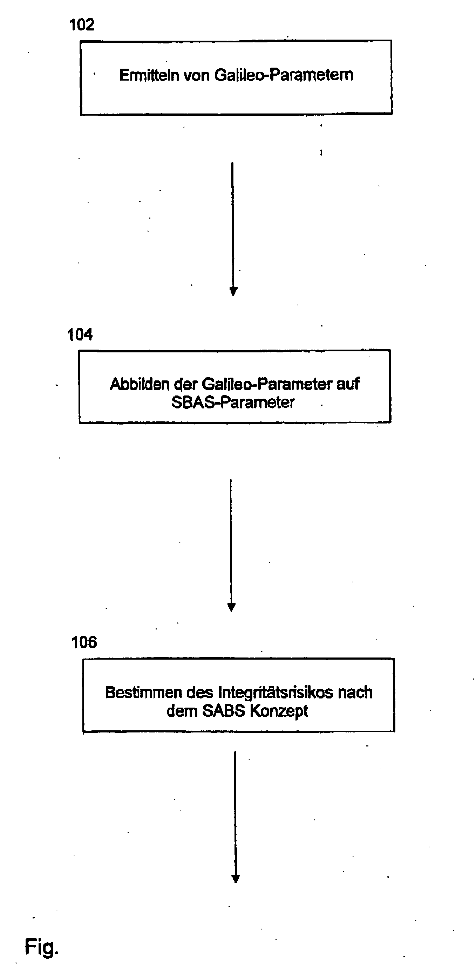

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel. Die einzige Zeichnung zeigt ein Flussdiagramm eines Verfahrens zur Bestimmung eines Integritätsrisikos gemäß einem Ausführungsbeispiel der vorliegenden Erfindung.

Im Folgenden können gleiche und/oder funktional gleiche Elemente mit den gleichen Bezugszeichen versehen sein. Die im Folgenden angegebenen absoluten Werte und Maßangaben sind nur beispielhafte Werte und stellen keine Einschränkung der Erfindung auf derartige Dimensionen dar.

Die Fig. zeigt ein Flussdiagramm eines Verfahrens zur Bestimmung eines Integritätsrisikos bei einem Satelliten-Referenziersystem gemäß einem Ausführungsbeispiel der vorliegenden Erfindung. Bei dem Satelliten-Referenziersystem kann es sich um das Galileo System handeln auf dessen Integritätskonzept Bezug genommen wird.

Das Verfahren zur Bestimmung eines Integritätsrisikos umfasst einen Schritt des Ermittelns 102 von Galileo-Parametern nach dem Galileo Integritätskonzept, einen Schritt des Abbildens 104 der Galileo-Parameter auf in SBAS verwendete SBAS-Parameter und einen Schritt des Bestimmens 106 des Integritätsrisikos nach dem SABS Konzept unter Verwendung der SBAS-Parameter.

Für das Galileo Integritätskonzept wird die "Range Error" Verteilung von fehlerfreien Satelliten durch eine Gaußverteilung mit "Null" Mittelwert und "Signal in Space Accuracy" Standardabweichung eingeschlossen (overbounded). Die Verteilung der Differenz zwischen dem geschätzten "Signal in Space Error" und dem wahren "Signal in Space Error" wird durch eine Gaußverteilung mit "Null" Mittelwert und "Signal in Space Monitoring Accuracy" Standardabweichung eingeschlossen. Die Wahrscheinlichkeit dass ein einzelner Satellit fehlerhaft ist, wird p_fail_sat bezeichnet.

Um die Verwendung der einfachen, für SBAS standardisierten, Schutzpegel-Gleichungen (protection level equations) zu ermöglichen, wird ein neuer Parameter "Signal in Space Monitored Accuracy" (SISMdA) definiert. Eine Gaußfunktion mit Standardabweichung SISMdA und "Null" Mittelwert soll eine gewichtete Summe der fehlerfreien und der fehlerhaften Verteilung eines Satelliten einschließen. Der Gewichtungsfaktor für die fehlerfreie Verteilung ist 1-p_fail_sat, während der Gewichtungsfaktor für die fehlerhafte Verteilung p_fail_sat sein soll. Die "range error" Verteilung des fehlerhaften Satelliten soll eine Gaußverteilung mit Standardabweichung SISMA und einem Mittelwert sein, der ein Vorfaktor k_fa ist, der die erlaubte Fehleralarmrate multipliziert mit der Quadratwurzel der Summe des Quadrats von SISMA und dem Quadrat von SISA widerspiegelt.

Dieser neue Parameter kann als der Orbit- und Taktanteil der UDRE von den WAAS Schutzpegelgleichungen (WAAS protection level equations) verwendet werden. Wenn Zweifrequenz "Ranging Signals" verwendet werden, muss der ionosphärische Beitrag der WAAS Gleichungen entsprechend den Galileo Gleichungen angepasst werden.

Gemäß einem Ausführungsbeispiel kann somit aus der "Signal in Space Accuracy" (SISA), der "Signal in Space Monitoring Accuracy" (SISMA) und der Wahrscheinlichkeit eines "ranging signal failures", ein neuer Parameter "Signal in Space Monitored Accuracy" berechnet werden. Der neue Parameter kann als Takt- und Orbitanteil der UDRE in den SBSA Schutzpegel-Gleichungen (SBSA protection level equations) verwendet werden.

## Patentansprüche

1. Verfahren zur Bestimmung eines Integritätsrisikos bei einem Satelliten-Referenziersystem, das folgende Schritte umfasst:
- Ermitteln (102) von Galileo-Parametern nach dem Galileo Integritätskonzept;
- Abbilden (104) der Galileo-Parameter auf SBAS-Parameter; und
- Bestimmen (106) des Integritätsrisikos für das Satelliten-Referenziersystem nach dem SBAS Integritätskonzept unter Verwendung der SBAS-Parameter
, wobei
- der Schritt des Ermittelns ein Ermitteln der Galileo-Parameter "Signal in Space Accuracy" (SISA), "Signal in Space Monitoring Accuracy" (SISMA) und der Wahrscheinlichkeit eines "ranging signal failures" beinhaltet;
- der Schritt des Abbildens ein Berechnen eines neuen Parameters "Signal in Space Monitored Accuracy" (SISMdA) umfasst, wobei eine Gaußfunktion mit Standardabweichung SISMdA und "Null" Mittelwert eine gewichtete Summe der fehlerfreien und der fehlerhaften "range error" Verteilung eines Satelliten einschließt und der dabei verwendete Gewichtungsfaktor für die fehlerhafte Verteilung die Wahrscheinlichkeit, dass ein einzelner Satellit fehlerhaft ist, p_fail_sat ist und der verwendete Gewichtungsfaktor für die fehlerfreie Verteilung 1-p_fail_sat ist, und
- der Schritt des Bestimmens ein Verwenden des neuen Parameters (SISMdA) als Takt- und Orbitanteil der UDRE in den für SBSA standardisierten Schutzpegel-Gleichungen umfasst.

2. Verfahren gemäß Anspruch 1, wobei für das Galileo Integritätskonzept eine "range error" Verteilung von fehlerfreien Satelliten durch eine Gaußverteilung mit "Null" Mittelwert und "Signal in Space Accuracy" (SI-SA) Standardabweichung eingeschlossen wird und eine Verteilung der Differenz zwischen dem geschätzten "Signal in Space Error" und dem wahren "Signal in Space Error" durch eine Gaußverteilung mit "Null" Mittelwert und "Signal in Space Monitoring Accuracy" (SISMA) Standardabweichung eingeschlossen wird.

3. Verfahren gemäß einem der vorangegangenen Ansprüche, wobei eine "range error" Verteilung eines fehlerhaften Satelliten eine Gaußverteilung mit Standardabweichung SISMA und einem Mittelwert ist, der ein Vorfaktor k_fa ist, der eine erlaubte Fehleralarmrate multipliziert mit der Quadratwurzel der Summe des Quadrats von SISMA und dem Quadrat von SISA widerspiegelt.

4. Verfahren gemäß einem der vorangegangenen Ansprüche, wobei Zweifrequenz "ranging signals" verwendet werden und ein ionosphärische Beitrag der WAAS Gleichungen entsprechend den Galileo Gleichungen angepasst wird.

5. Computer Programm zur Durchführung eines Verfahrens gemäß einem der vorangegangenen Ansprüche.

6. Computer-Programm-Produkt beinhaltend einen maschinenlesbaren Programmträger, auf dem ein Computer-Programm gemäß Anspruch 5 in der Form von elektronisch und/oder optischen lesbaren Steuersignalen gespeichert ist.

7. Vorrichtung zur Bestimmung eines Integritätsrisikos bei einem Satelliten-Referenziersystem, mit folgenden Merkmalen:
- einer Einrichtung zum Ermitteln von Galileo-Parametern nach dem Galileo Integritätskonzept beinhaltend ein Ermitteln der Galileo-Parameter "Signal in Space Accuracy" (SISA), "Signal in Space Monitoring Accuracy" (SISMA) und der Wahrscheinlichkeit eines "ranging signal failures";
- einer Einrichtung zum Abbilden der Galileo-Parameter auf SBAS-Parameter umfassend ein Berechnen eines neuen Parameters "Signal in Space Monitored Accuracy" (SISMdA), wobei eine Gaußfunktion mit Standardabweichung SISMdA und "Null" Mittelwert eine gewichtete Summe der fehlerfreien und der fehlerhaften "range error" Verteilung eines Satelliten einschließt und der dabei verwendete Gewichtungsfaktor für die fehlerhafte Verteilung die Wahrscheinlichkeit, dass ein einzelner Satellit fehlerhaft ist, p_fail_sat ist und der verwendete Gewichtungsfaktor für die fehlerfreie Verteilung 1-p_fail_sat ist, und
- einer Einrichtung zum Bestimmen des Integritätsrisikos für das Satelliten-Referenziersystem nach dem SABS Integritätskonzept unter Verwendung der SBAS-Parameter umfassend ein Verwenden des neuen Parameters (SISMdA) als Takt- und Orbitanteil der UDRE in den für SBSA standardisierten Schutzpegel-Gleichungen.

## Claims

1. Method for determining an integrity risk in a satellite referencing system, comprising the following steps:
- establishing (102) Galileo parameters according to the Galileo integrity concept;
- mapping (104) the Galileo parameters onto SBAS parameters; and
- determining (106) the integrity risk for the satellite referencing system according to the SBAS integrity concept using the SBAS parameters, wherein
- the step of establishing contains establishment of the Galileo parameters "Signal in Space Accuracy" (SISA), "Signal in Space Monitoring Accuracy" (SISMA) and the probability of a "ranging signal failure";
- the step of mapping comprises a calculation of a new parameter "Signal in Space Monitored Accuracy" (SISMdA), wherein a Gaussian function with standard deviation SISMdA and "zero" mean includes a weighted sum of the error-free and incorrect "range error" distribution of a satellite and the weighting factor, used in the process, for the incorrect distribution is the probability that an individual satellite is malfunctioning, p_fail_sat, and the used weighting factor for the error-free distribution is 1 - p_fail_sat, and
- the step of determining comprises a use of the new parameter (SISMdA) as clock and orbit component of the UDRE in the protection level equations standardized for SBSA.

2. Method according to Claim 1, wherein a "range error" distribution of error-free satellites is included for the Galileo integrity concept by a Gaussian distribution with "zero" mean and "Signal in Space Accuracy" (SISA) standard deviation and a distribution of the difference between the estimated "Signal in Space Error" and the true "Signal in Space Error" is included by a Gaussian distribution with "zero" mean and "Signal in Space Monitoring Accuracy" (SISMA) standard deviation.

3. Method according to one of the preceding claims, wherein a "range error" distribution of a malfunctioning satellite is a Gaussian distribution with standard deviation SISMA and a mean, which is a pre-factor k_fa, which reflects an allowed error-alarm rate multiplied by the square root of the sum of SISMA squared and SISA squared.

4. Method according to one of the preceding claims, wherein two-frequency "ranging signals" are used and an ionospheric contribution of the WAAS equations is adapted in accordance with the Galileo equations.

5. Computer program for carrying out a method according to one of the preceding claims.

6. Computer program product, containing a machine-readable program medium, on which a computer program according to Claim 5 is stored in the form of electronically and/or optically readable control signals.

7. Device for determining an integrity risk in a satellite referencing system, comprising the following features:
- an apparatus for establishing Galileo parameters according to the Galileo integrity concept, containing an establishment of the Galileo parameters "Signal in Space Accuracy" (SISA), "Signal in Space Monitoring Accuracy" (SISMA) and the probability of a "ranging signal failure";
- an apparatus for mapping the Galileo parameters onto SBAS parameters comprising a calculation of a new parameter "Signal in Space Monitored Accuracy" (SISMdA), wherein a Gaussian function with standard deviation SISMdA and "zero" mean includes a weighted sum of the error-free and incorrect "range error" distribution of a satellite and the weighting factor, used in the process, for the incorrect distribution is the probability that an individual satellite is malfunctioning, p_fail_sat, and the used weighting factor for the error-free distribution is 1 - p_fail_sat, and
- an apparatus for determining the integrity risk for the satellite referencing system according to the SABS integrity concept using the SBAS parameters comprising a use of the new parameter (SISMdA) as clock and orbit component of the UDRE in the protection level equations standardized for SBSA.

## Revendications

1. Procédé de détermination d'un risque d'intégrité sur un système de référence par satellite, le procédé comportant les étapes suivantes :
détermination (102) de paramètres Galileo selon le concept d'intégrité Galileo,
formation (104) d'une image des paramètres Galileo en paramètres SBAS et
détermination (106) du risque d'intégrité du système de référence par satellite selon le concept d'intégrité SBAS par recours aux paramètres SBAS,
l'étape de détermination contenant une détermination des paramètres Galileo "Signal in Space Accuracy" (SISA) (précision du signal dans l'espace), "Signal in Space Monitoring Accuracy" (SISMA) (précision de surveillance du signal dans l'espace) et probabilité de "ranging signal failures" (erreurs de signal de portée),
l'étape de formation d'image comporte le calcul d'un nouveau paramètre ("Signal in Space Monitored Accuracy" (SISMdA), dans lequel une fonction de Gauss dont l'écart type est SISMdA et valeur moyenne est "zéro" inclut une somme pondérée de la répartition sans erreur et de la répartition avec erreur "range error" d'un satellite et le facteur de pondération utilisé pour la répartition erronée est la probabilité qu'un satellite soit défectueux, à savoir p_fail_sat, et le facteur de pondération utilisé pour la répartition sans erreur est 1-p_fail_sat et
l'étape de détermination comporte l'utilisation du nouveau paramètre (SISMdA) comme partie de cadençage et d'orbite de l'UDRE dans les équations standardisées de niveau de protection pour le SBSA.

2. Procédé selon la revendication 1, dans lequel une répartition "range error" des satellites sans défaut pour une distribution de Gauss dont la valeur moyenne est "zéro" et l'écart type "Signal in Space Accuracy" (SISA) est incluse et une répartition de la différence entre le "Signal in Space error" estimé et le "Signal in Space error" réel est incluse par une distribution de Gauss dont la valeur moyenne est "zéro" et l'écart type est "Signal in Space Monitoring Accuracy" (SISMA).

3. Procédé selon l'une des revendications précédentes, dans lequel une répartition "range error" d'un satellite défectueux est une distribution de Gauss dont l'écart type est SISMA et la valeur moyenne est un pré-facteur k_fa qui multiplie un taux admissible d'alarme de défaut par la racine carrée de la somme du carré du SISMA et du carré du SISA.

4. Procédé selon l'une des revendications précédentes, qui utilise des "ranging signals" à deux fréquences et dont la contribution de l'ionosphère dans les équations WAAS est adaptée en fonction des équations Galileo.

5. Programme informatique en vue de la mise en oeuvre d'un procédé selon l'une des revendications précédentes.

6. Produit de programme informatique contenant un support de programme lisible par machine et sur lequel un programme informatique selon la revendication 5 est conservé en mémoire sous la forme de signaux de commande lisibles par voie électronique et/ou par voie optique.

7. Ensemble de détermination d'un risque d'intégrité d'un système de référence par satellite, l'ensemble présentant les caractéristique suivantes :
un dispositif de détermination de paramètres Galileo selon le concept d'intégrité Galileo, contenant la détermination des paramètres Galileo "Signal in Space Accuracy" (SISA) (précision du signal dans l'espace), "Signal in Space Monitoring Accuracy" (SISMA) (précision de surveillance du signal dans l'espace) et probabilité de "ranging signal failures" (erreurs de signal de portée),
un dispositif de formation d'une image des paramètres Galileo en paramètres SBAS comportant le calcul d'un nouveau paramètre ("Signal in Space Monitored Accuracy" (SISMdA), dans lequel une fonction de Gauss dont l'écart type est SISMdA et valeur moyenne est "zéro" inclut une somme pondérée de la répartition sans erreur et de la répartition avec erreur "range error" d'un satellite et le facteur de pondération utilisé pour la répartition erronée est la probabilité qu'un satellite soit défectueux, à savoir p_fail_sat, et le facteur de pondération utilisé pour la répartition sans erreur est 1-p_fail_sat,
un dispositif de détermination du risque d'intégrité du système de référence par satellite selon le concept d'intégrité SBAS par recours aux paramètres SBAS, comportant l'utilisation du nouveau paramètre (SISMdA) comme partie de cadençage et d'orbite de l'UDRE dans les équations standardisées de niveau de protection pour le SBSA.
